# EUROPÄISCHE PATENTSCHRIFT

(11) **EP 3 173 704 B1**
(45) Veröffentlichungstag und Bekanntmachung des Hinweises auf die Patenterteilung: **07.06.2023**
(21) Anmeldenummer: 15203181.1
(22) Anmeldetag: 30.12.2015
(51) Int. Cl.: F24F 3/044, F24F 12/00

(54) **RAUMLUFTTECHNISCHE ANLAGE MIT ZUMINDEST ZWEI TRENNFLÄCHEN-WÄRMEÜBERTRAGERN SOWIE VERWENDUNG EINER SOLCHEN ANLAGE IN EINEM REKUPERATIVEN VERFAHREN ZUR WÄRMERÜCKGEWINNUNG MIT FESTEN AUSTAUSCHFLÄCHEN**
VENTILATION ASSEMBLY WITH AT LEAST TWO PLATE HEAT EXCHANGERS AND USE OF SUCH AN ASSEMBLY IN A RECUPERATIVE METHOD FOR HEAT RECOVERY WITH SOLID EXCHANGE SURFACES
INSTALLATION DE VENTILATION COMPRENANT AU MOINS DEUX ÉCHANGEURS DE CHALEUR À PLAQUES ET UTILISATION D'UNE TELLE INSTALLATION DANS UN PROCÉDÉ DE RÉCUPÉRATION DE CHALEUR À L'AIDE DE SURFACES D'ÉCHANGE SOLIDES

(30) Priorität: 21.10.2015 DE 102015013641
(43) Veröffentlichungstag der Anmeldung: 31.05.2017
(73) Patentinhaber: Howatherm Klimatechnik GmbH, 55767 Brücken (DE)
(72) Erfinder: Dr.-Ing. Kaup, Christoph, 55767 Brücken (DE)
(74) Vertreter: Westphal, Mussgnug & Partner Patentanwälte mbB

(56) Entgegenhaltungen:
- EP-A1- 2 275 751
- GB-A- 2 296 968

## Beschreibung

Die Erfindung betrifft eine raumlufttechnische Anlage mit zumindest zwei Trennflächen-Wärmeübertragern, insbesondere zur Dachmontage über einem Rechenzentrum oder einem sonstigen thermisch hochbelasteten Raum, sowie deren Verwendung in einem rekuperativen Verfahren zur Wärmerückgewinnung mit festen Austauschflächen.

Bekannte Trennflächen-Wärmeübertrager übertragen bevorzugt sensible Wärme. Fluidströme unterschiedlicher Temperatur sind durch dünne Platten voneinander getrennt, beispielsweise Platten aus Aluminium, Edelstahl oder Kunststoff. Die Platten sind miteinander verklebt oder mechanisch verbunden sowie beispielsweise in Eckprofilen abgedichtet. Die Platten mit einer bestimmten Plattenstärke sind in geringem Abstand mit bestimmter Spaltbreite parallel oft in einem eigenen Plattengehäuse angeordnet. Die beiden Luftströme werden nach bekannten Verfahren zwischen den Platten im Kreuzstrom, Kreuz-/Gegenstrom oder Gegenstrom geführt.

Nach den üblichen Merkmalen der Systeme zur Wärmerückgewinnung aus VDI 3803 Blatt 5 ist für Plattenwärmeübertrager ein mittlerer Platzbedarf zu berücksichtigen. Je nach Platzanforderungen wählt der Fachmann bisher zwischen einer 45°-Diagonalanordnung oder der üblichen geraden Reihenanordnung aus, bei der die Luft meist im 90°-Winkel auf die Plattenkanten auftrifft. Auch beispielsweise die EP 1 085 273 A1 lehrt zur Anordnung nichts davon Abweichendes. Die Platten werden mit ihren Anströmseiten entweder quer oder schräg zur Hauptströmungsrichtung als möglichst geringe Prallfläche angeordnet.

GB 2 296 968 A und EP 2 275 751 A1 bilden den weiteren Stand der Technik.

Es ist bekannt, dass in einer raumlufttechnischen Anlage mehrere Trennflächen-Wärmeübertrager hintereinander geschaltet werden können. Plattenwärmeübertrager werden bei dieser Schaltung bisher immer derart angeordnet, dass ihre Anströmseiten der Platten einander zugewandt sind.

Eine Leistungsregelung kann bei Trennflächen-Wärmeübertragern durch das Verändern des Massenstromverhältnisses erfolgen. Hierzu wird im Stand der Technik ein Bypass eingesetzt, beispielsweise ein in oder neben dem Wärmeübertrager integrierter Bypass. Je nach Stellung der Bypass-Klappen werden beispielsweise zwischen 0 % und 100 % der Außenluft über den Bypass geführt. Die Abluft strömt als Fortluft durch den Wärmeaustauscher und wird entsprechend der Außenluftmenge abgekühlt. Mit dieser Anordnung des Bypasses kann zugleich das zu starke Abkühlen der Abluft und damit das Vereisen verhindert werden.

Raumlufttechnische Anlagen werden hinsichtlich ihrer Wirkungsgrade immer kritischer bewertet. Es besteht daher weiterhin das Erfordernis, das neue Anlagenkonzepte deutliche Verbesserungen bewirken. Zielsetzungen bestehen beispielsweise in der Elimination einer bisher zusätzlichen erforderlichen mechanischen Kälteerzeugung, wenn bei Anwendungen wie Rechenzentren eine Zulufttemperatur von maximal 24 °C gewährleistet werden muss. Solches soll mit möglichst kompakten raumlufttechnischen Anlagen erreicht werden.

Die Erfindung schlägt zur Lösung zumindest eines dieser Probleme eine raumlufttechnische Anlage nach Anspruch 1 und die Verwendung nach Anspruch 15 vor.

Vorteilhafte Ausführungsformen sind in den jeweiligen Unteransprüchen angegeben.

Nach einer gattungsgemäßen Variante weist eine raumlufttechnische Anlage auf zumindest einen ersten Hauptströmungsweg von einem Abluftanschluss zu einem Fortluftanschluss, einen zweiten Hauptströmungsweg von einem Außenluftanschluss zu einem Zuluftanschluss, zumindest ein Gehäuse und zumindest zwei in dem zumindest einen Gehäuse an benachbarten Anordnungsstellen in Reihe angeordneten, zwischen zumindest den Luftströmen des ersten und zweiten Hauptströmungswegs Wärme übertragenden Trennflächen-Wärmeübertragern, wobei der jeweilige Trennflächen-Wärmeübertrager zumindest vier Strömungsseiten und zwei bezüglich Luftströmen undurchlässige Breitseiten aufweist, und wobei eine gedachte Längsachse des jeweiligen Trennflächen-Wärmeübertragers die Breitseiten und Trennflächen durchstößt, wobei die Längsachsen zumindest grob parallel ausgerichtet sind.

Erfindungsgemäß sind die luftundurchlässigen Breitseiten der in Reihe geschalteten Trennflächen-Wärmeübertrager einander zugewandt angeordnet.

Die oben genannten Luftanschlüsse sind gemäß einer vorteilhaften Ausführungsform in zumindest einem Luftende des Gehäuses angeordnet. Die Trennflächen-Wärmeübertrager sind in einem zu dem Luftende beabstandeten Übertragungsende des Gehäuses angeordnet. Zwischen dem Luftende und dem Übertragungsende ist/sind zumindest eine Umschalteinrichtung mit Klappen zumindest zum Umlenken der Luftströme angeordnet. Ein rekuperatives Verfahren verwendet einen solchen oder nach den jeweiligen Unteransprüchen weitergebildeten raumlufttechnischen Aufbau.

Mit dem erfindungsgemäßen Anordnen der Plattenwärmeübertrager abweichend von seinen bekannten Standardanordnungen ergibt sich der Vorteil, dass ein Gehäuse völlig neu konzipiert werden kann, da die sowieso notwendige Umlenkung im Plattenwärmeübertrager als Umlenkung des Luftstroms zur Anschlussseite, dem Luftende, verwendet wird.

Bei den erfindungsgemäßen Ausführungsformen kann je nach benötigter Kühlleistung durch das Schalten oder Regeln von Klappen, die Anpassung von bevorzugt in einem Sackende angeordneten Befeuchterstufen und eine integrierte Umschaltung zwischen direkter und indirekter Außenluftnutzung werden zu niedrige und zu hohe Feuchten in der Zuluft und eine sonst zusätzlich erforderliche Kältemaschine vermieden. Der spezifische Elektroenergiebedarf und auch sonstige Kosten können gesenkt werden.

Nachfolgend ist die Erfindung anhand von Figuren näher erläutert. Es zeigen
Fig. 1 eine raumlufttechnische Anlage nach einem ersten Ausführungsbeispiel in einer Draufsicht mit eingetragenen Schnitten A - A, B - B, C - C und D - D,
Fig. 2 die raumlufttechnische Anlage aus Figur 1 im Schnitt A - A von einer Bedienseite,
Fig. 3 die raumlufttechnische Anlage aus Figur 1 im Schnitt B - B von einer weiteren Bedienseite,
Fig. 4 die raumlufttechnische Anlage aus Figur 1 im Schnitt C - C, parallel zu einer durch eine Umschalteinrichtung verlaufenden Hauptströmungsrichtung S, durch die raumlufttechnische Anlage hindurch,
Fig. 5 die raumlufttechnische Anlage aus Figur 1 im weiteren zu dem Schnitt C-C der Figur 4 parallelen Schnitt D - D, ebenfalls parallel zu einer durch eine Umschalteinrichtung verlaufenden Hauptströmungsrichtung S, durch die raumlufttechnische Anlage hindurch,
Fig. 6 eine raumlufttechnische Anlage in prinzipiellerer Darstellung, wobei ein Gehäuse mit zwei in Reihe geschalteten Wäremeübertragern nach der zweiten Erfindungsvariante schematisch dargestellt ist,
Fig. 7 die raumlufttechnische Anlage nach Figur 6 mit mittels Pfeilen dargestellten Luftströmen nach einem Außenluft-Zuluft-Modus einer Stufe 1,
Fig. 8 die raumlufttechnische Anlage nach Figur 6 mit mittels Pfeilen dargestellten Luftströmen nach einem Abluft-Fortluft-Modus einer Stufe 1,
Figur 9 die raumlufttechnische Anlage nach Figur 6 mit mittels Pfeilen dargestellten Luftströmen nach einem Abluft-Zuluft-Modus einer Stufe 2,
Figur 10 die raumlufttechnische Anlage nach Figur 6 mit mittels Pfeilen dargestellten Luftströmen nach einem Außenluft-Fortluft-Modus einer Stufe 2,
Figur 11 die raumlufttechnische Anlage nach Figur 6 mit mittels Pfeilen dargestellten Luftströmen nach einem Außenluft-Zuluft-Bypassmodus,
Figur 12 die raumlufttechnische Anlage nach Figur 6 mit mittels Pfeilen dargestellten Luftströmen nach einem Abluft-Fortluft-Bypassmodus,
Figur 13 eine schematische, perspektivische und teiltransparente Darstellung eines Ausschnittes einer erfindungsgemäßen raumlufttechnischen Anlage, nämlich auf ein Übertragungsende mit zwei in Reihe geschalteten Trennflächen-Wärmeübertragern und
Figur 14 einen Schnitt E - E durch eine zwischen Breitseiten der beiden Trennflächen-Wärmeübertrager aus Figur 13 in das Übertragungsende eingesetzten Trennwand mit integrierten Klappen.

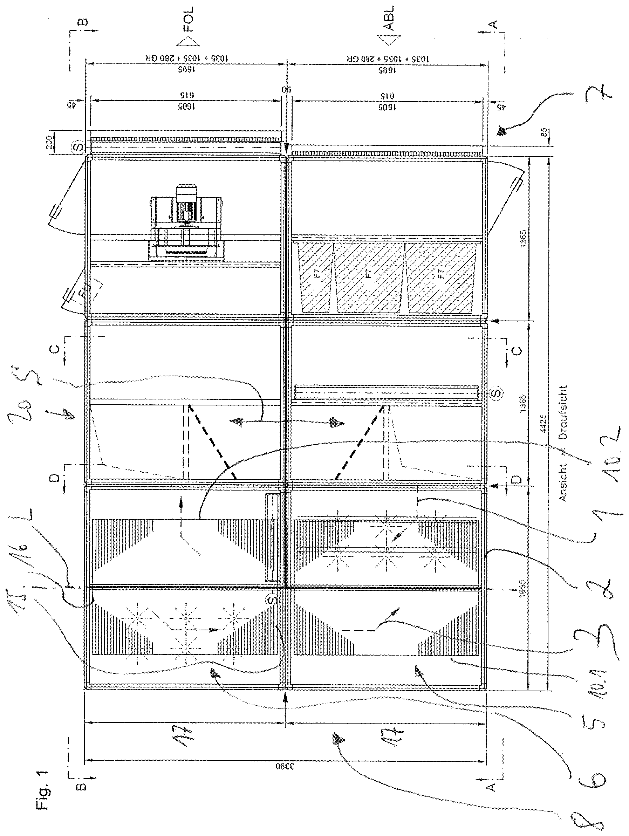

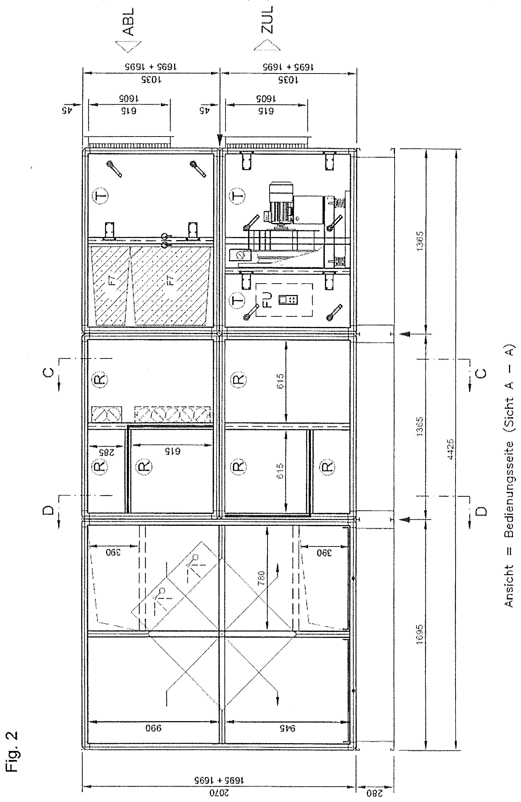

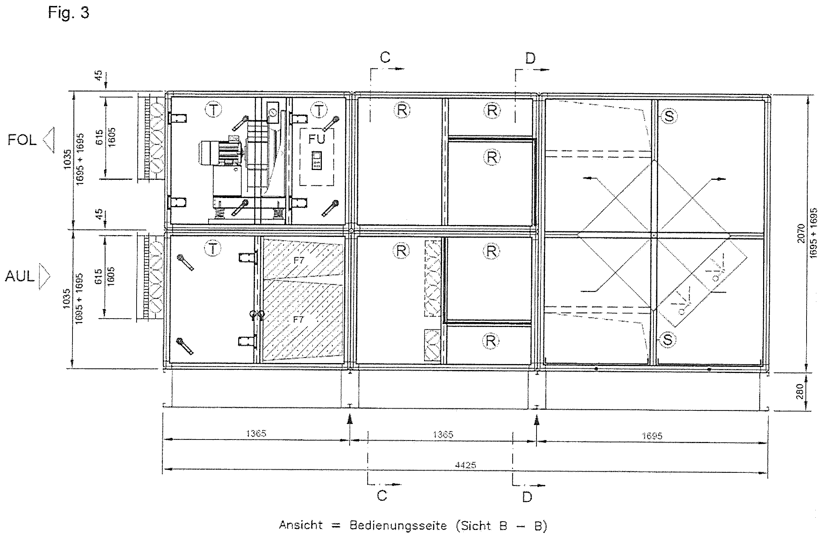

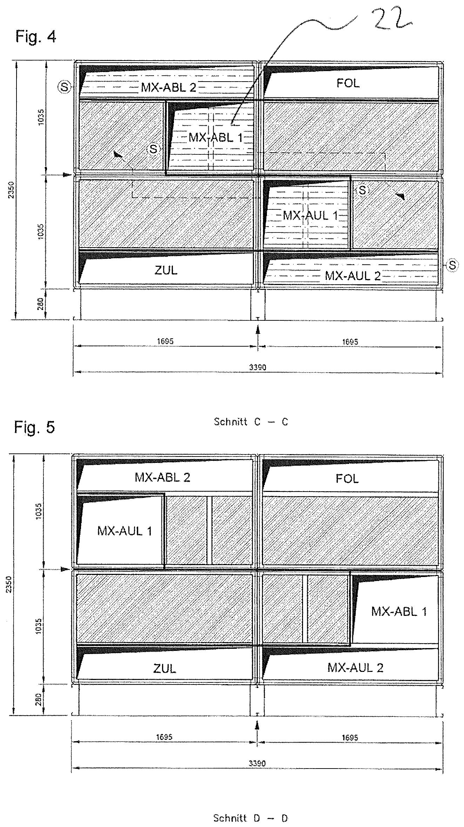

In den Figuren 1 bis 5 ist in diversen Ansichten bzw. Schnitten gemäß obiger Liste ein erstes Ausführungsbeispiel einer erfindungsgemäßen Anordnung dargestellt. Demnach weist eine raumlufttechnische Anlage auf zumindest einen ersten Hauptströmungsweg 1 von einem Abluftanschluss ABL zu einem Fortluftanschluss FOL, einen zweiten Hauptströmungsweg 3 von einem Außenluftanschluss AUL zu einem Zuluftanschluss ZUL, ein beide Strömungswege umfassendes Gehäuse 2 und zumindest zwei (10.1, 10.2) in dem Gehäuse 2 an einer Anordnungsstelle 5, 6 zwischen den Luftströmen des ersten und zweiten Hauptströmungswegs 1, 3 Wärme übertragende Trennflächen-Wärmeübertrager 10, wobei die Trennflächen-Wärmeübertrager 10 zumindest vier Strömungsseiten 11, 12, 13, 14 und zwei bezüglich Luftströmen undurchlässige Breitseiten 15, 16 aufweist, und wobei eine gedachte Längsachse L der Trennflächen-Wärmeübertrager 10 die Breitseiten und Trennflächen durchstößt.

Die oben genannten Luftanschlüsse sind in zumindest einem Luftende 7 des Gehäuses 2 angeordnet. Die Trennflächen-Wärmeübertrager 10 sind in einem zu dem Luftende 7 beabstandeten Übertragungsende 8 des Gehäuses 2 angeordnet. Zwischen dem Luftende 7 und dem Übertragungsende 8 ist/sind zumindest eine Umschalteinrichtung 20 mit Klappen 22 zumindest zum Umlenken der Luftströme angeordnet.

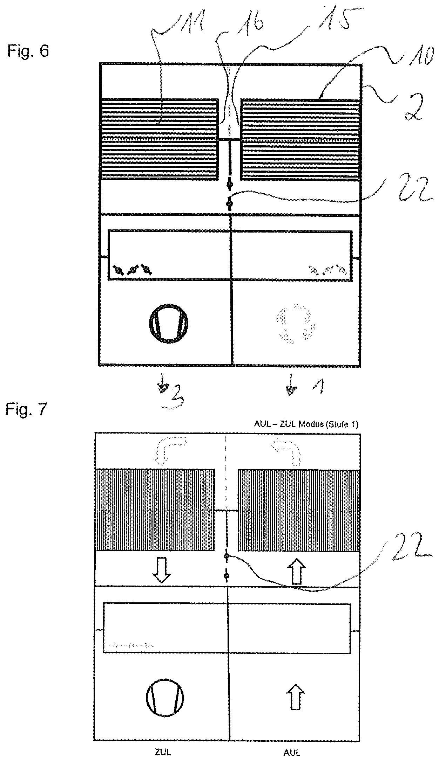

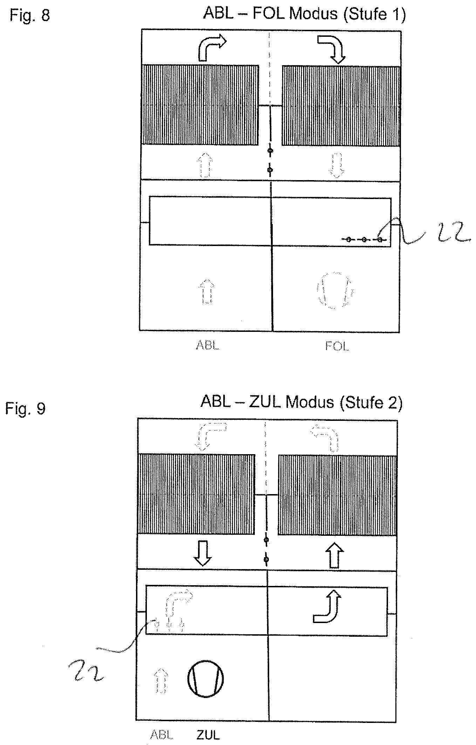

Nach einer weiteren vorteilhaften Ausführungsform, vgl. Figuren 6 bis 12, umfasst eine raumlufttechnische Anlage zumindest einen ersten Hauptströmungsweg 1 von einem Abluftanschluss ABL zu einem Fortluftanschluss FOL, einen zweiten Hauptströmungsweg 3 von einem Außenluftanschluss AUL zu einem Zuluftanschluss ZUL, ein Gehäuse 2 und zumindest zwei in dem zumindest einen Gehäuse 2 an benachbarten Anordnungsstellen 5, 6 in Reihe angeordneten, zwischen zumindest den Luftströmen des ersten und zweiten Hauptströmungswegs 1, 3 Wärme übertragenden Trennflächen-Wärmeübertrager 10, wobei der jeweilige Trennflächen-Wärmeübertrager 10 zumindest vier Strömungsseiten 11, 12, 13, 14 und zwei bezüglich Luftströmen undurchlässige Breitseiten 15, 16 aufweist, und wobei eine gedachte Längsachse L des jeweiligen Trennflächen-Wärmeübertragers 10 die Breitseiten und Trennflächen durchstößt.

Die luftundurchlässigen Breitseiten der in Reihe geschalteten Trennflächen-Wärmeübertrager 10 sind einander zugewandt angeordnet, wobei die Längsachsen L entweder zumindest grob parallel oder übereinstimmend ausgerichtet sind (wie in sämtlichen Figuren gezeigt) oder einen Winkel von etwa von 140° bis 165 ° einschließen (nicht dargestellt).

Nach einer bevorzugten Ausführungsform einer solchen erfindungsgemäßen raumlufttechnischen Anlage weist der Trennflächen-Wärmeübertrager 10, 10.1, 10.2 eine Strömungsseitenlänge 17, also eine Länge entlang der Längsachse L, auf, die deutlich größer ist als die Länge der Breitseiten 15, 16, insbesondere größer als 1,5 mal so groß wie die Breitseitenlänge.

Das hier als besonders vorteilhaft beschriebene Längenverhältnis ist keine Notwendigkeit erfindungsgemäßer Varianten. Es ist allerding deswegen vorteilhaft, wenn mehr Wärmetauschfläche benötigt wird und in der Stapelhöhe keine bauliche Einschränkung gegeben ist, sobald die Wärmeübertrager erfindungsgemäß oder nach einer vorteilhaften Ausführungsform angeordnet wird/werden. Wird beispielsweise auf einem Dach eines Rechenzentrums montiert, kann die Dachfläche schnell durch andere Raumforderungen eingeschränkt sein.

Nach einer weiteren vorteilhaften Ausführungsform ist - nach den Darstellungen ausschließlich - das Luftende 7 nach außen bezüglich Luftdurchtritt offen, wie zu beiden Erfindungsvarianten dargestellt, während das Übertragungsende 8 keine luftführende Verbindung zur Umgebung aufweist, demnach geschlossen als eine Art Sackende ausgeführt ist.

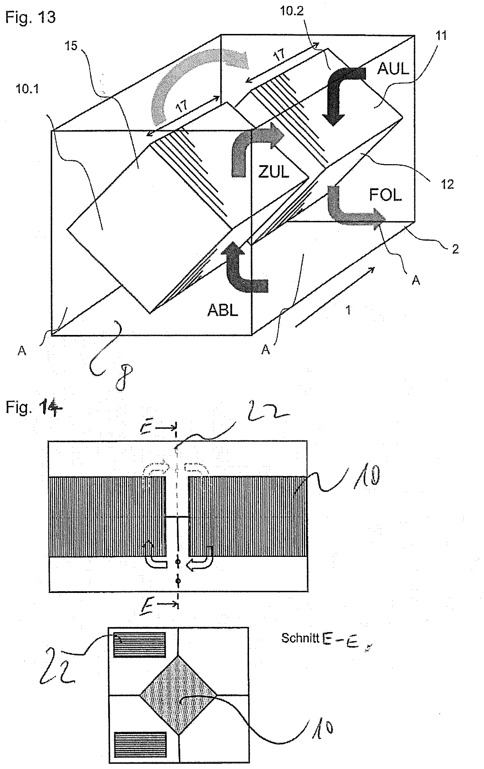

Nach einer weiteren vorteilhaften Ausführungsform sind die Trennflächen-Wärmeübertrager 10 quer zu zumindest einer Ein- oder Ausströmrichtung in das oder aus dem Gehäuse 2 angeordnet, wobei zumindest eine Strömungsseite 11, 12, 13, 14 dem Luftende 7 zugewandt ist, um Luft aus der Umschalteinrichtung 20 zu empfangen beziehungsweise an die Umschalteinrichtung 20 abzugeben. Zu einer möglichen erfindungsgemäßen Lage der luftoffenen Strömungsseiten zeigen die Figuren 13 und 14 Entsprechendes.

Die dargestellten Ausführungsbeispiele zeigen zwei Trennflächen-Wärmeübertrager 10, 10.1, 10.2 mit einander zugewandten luftundurchlässigen Breitseiten 15, 16 und zumindest grob in gleicher Längsausrichtung oder leicht mit zueinander ausgelenkten Längsachsen L in Reihe geschaltet.

Die Umschalteinrichtung 20 ist vorteilhaft als eine einzige entlang einer Hauptströmungsrichtung S geteilte Doppelkanalführung ausgeführt. Alternativ könnte sie aus zumindest zwei separaten zumindest abschnittsweise zumindest grob entlang dieser Hauptströmungsrichtung S verlaufenden Umschaltkanälen bestehen.

Die Umschalteinrichtung 20 führt den Darstellungen nach die Außenluft der Fortluft voneinander getrennt einander entgegen.

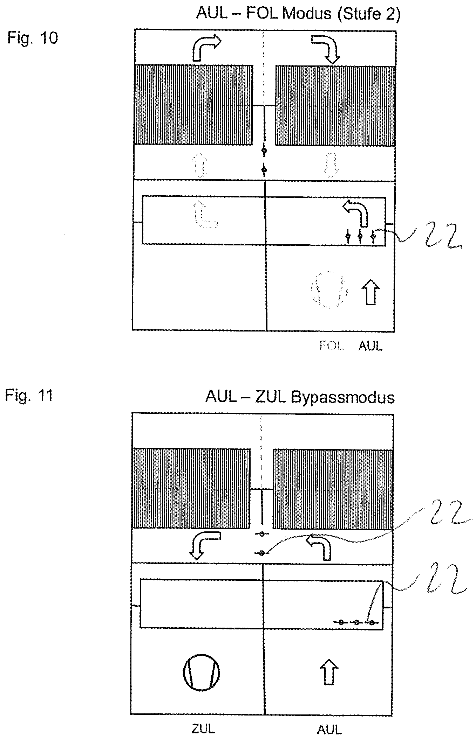

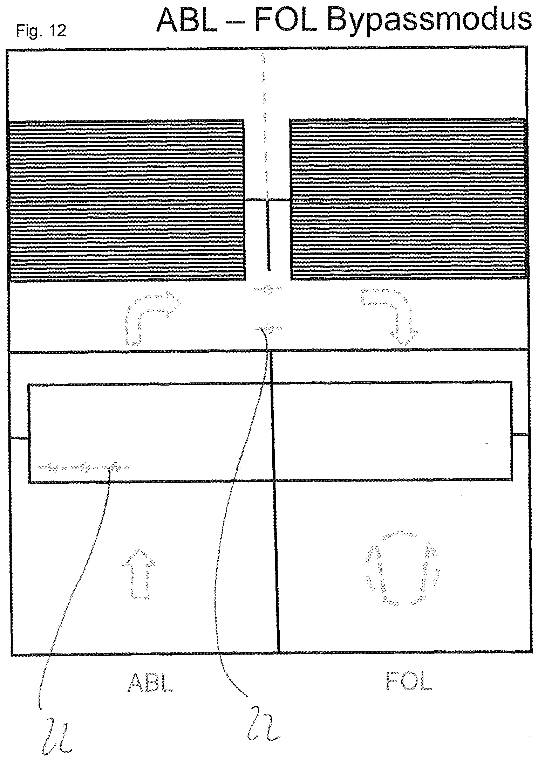

Klappenschaltungen und oder Klappenregelungen von Bypassklappen ermöglichen als eine nicht näher dargestellte Ausführungsform ein Umgehen der Trennflächen-Wärmeübertrager 10. Die Figuren 6 bis 12 zeigen schematisch diverse Modi mit unterschiedlichen Luftführungen durch erfindungsgemäße Anordnungen, beispielsweise auch Bypassmodi in den Figuren 11 und 12 unter Nutzung von Bypassklappen 22 nach Figur 14, Schnitt E - E.

Außerhalb der Umschalteinrichtung 20 oder in die Umschalteinrichtung 20 integriert, nämlich in ihren Kanalwandungen, ggf. mit außerhalb des Trennflächen-Wärmeübertragers 10 synchronisierte Bypassklappen erfindungsgemäßer raumlufttechnischer Anlagen eingesetzt sein.

Die Umschalteinrichtung 20 und/oder eine die Umschalteinrichtung umschließende Trennwand weist vorteilhaft quer zur Hauptströmungsrichtung S in Richtung Trennflächen-Wärmeübertrager 10 gesehen (vgl. Schnitte C - C oder D - D) nebeneinander in zumindest einer Wandung angeordnet eine erste Abluftklappe, eine erste Außenluftklappe, eine Fortluftklappe, eine Zuluftklappe, eine zweite Abluftklappe und / oder eine zweite Außenluftklappe auf.

Die Umschalteinrichtung 20 ist vorteilhaft als zumindest eine Umschaltbox mit zur Längsachse des Trennflächen-Wärmeübertragers 10 parallel ausgerichteter Hauptströmungsrichtung S ausgeführt.

Die Umschalteinrichtung 20 ist vorteilhaft in eine Regelung nach die Luft charakterisierenden Regelparametern integriert, sodass die in den Figuren 6 bis 12 schematisch verdeutlichten Modi nach rekuperativen Verfahren erreicht werden. Dazu können, insbesondere mit Aktoren, wie Mischklappen, die Luftströme nicht nur ein- oder abschalten sondern auch drosseln.

Die Umschalteinrichtung 20 weist quer zur Hauptströmungsrichtung S dem Übertragungsende 8 abgewandt in Kanalwänden, insbesondere in einer einzigen Seitenwand des Gehäuses, ausgeführt nebeneinander alle Luftanschlüsse ABL, AUL, FOL, ZUL auf.

Auch in der zumindest einen Kanalwand der Umschalteinrichtung 20 angeordnete Klappen sind nach vorteilhaften Erfindungsformen derart ausgelegt, dass Druckverluste der beiden Hauptströmungswege 1, 3 annähernd gleich sind, wenn beide Hauptströmungswege annähernd gleich häufig benötigt werden, oder entsprechend abweichender Häufigkeiten abweichende Querschnitte aufweisen.

In dem Wärmeübertragungsende 8, das in Figur 13 und 14 besonders herausgearbeitet ist, sind entlang einer globalen Strömungsrichtung 1' zwei Trennflächenwärmeübertrager 10.1, 10.2 dargestellt. Mit zwei bezüglich Luftströmen undurchlässigen Breitseiten 15, 16 quer zur globalen Strömungsrichtung 1' in das Sackende des Gehäuses 2 als Wärmeübnertragerreihe eingebaut, widerspricht das bekannten Prinzipien. Im geschlossenen Übertragungsende 8 muss das Gehäuse 2 eine Kanalfunktion mit Führung der Luft zumindest grob in globaler Strömungsrichtung 1' übernehmen. Genau hier sieht eine vorteilhafte Form der Erfindung es vor, dass nach Schnitt E - E eine Trennwand zwischen den Wärmetauschern eingezogen ist. Es zeigen sich jedoch vorteilhafte Luftströmungen bei entsprechender Klappenregelung und ggf. leichter Schrägstellung in einem Winkelbbereich zwischen 140° und 165°, den die beiden Übertragerlängsachsen zueinander einschließen.

Die in den Figuren gewählte schematische Darstellung verzichtet zur Betonung des Erfindungswesentlichen auf notwendige technische Details, wie beispielsweise Mittel zur Abschottung der Luftströme Zu- und Abluft zueinander um eine Vermischung der Luftströme zu verhindern. In Figur 13 als Pfeile eingezeichnete Luftströme gelangen beispielsweise durch Einfassung der Trennflächen-Wärmeübertrager in entsprechende Wände oder Wandabschnitte oder Kastenansätze in den Kontakt zur gewünschten Eintrittszone zwischen Platten. Ein oben in der Mitte eingetragener Pfeil deutet den Übertritt des nun beispielsweise schon in der ersten Stufe abgekühlten Abluftstroms ABL in den zweiten Trennflächen-Wärmeübertrager auf dessen Seite links oben an. Nach weiterer Abkühlung tritt der weiter abgekühlte Abluftstrom ABL schließlich unten rechts aus.

### Bezugszeichenliste

- 1: erster Hauptströmungsweg
- 1': globale Strömungsrichtung im Sackende
- 2: Gehäuse
- 3: zweiter Hauptströmungsweg
- 5: Anordnungsstelle
- 6: Anordnungsstelle
- 7: Luftende
- 8: Übertragungsende
- 10: Trennflächen-Wärmeübertrager
- 10.1: Trennflächen-Wärmeübertrager
- 10.2: Trennflächen-Wärmeübertrager

- 11: Strömungsseite
- 12: Strömungsseite
- 13: Strömungsseite
- 14: Strömungsseite
- 15: Breitseite
- 16: Breitseite
- 17: Strömungsseitenlänge

- 20: Umschalteinrichtung
- 22: Klappe

- ABL: Abluftanschluss
- AUL: Außenluftanschluss
- FOL: Fortluftanschluss
- ZUL: Zuluftanschluss

- L: Längsachse
- S: Hauptströmungsrichtung

## Patentansprüche

1. Raumlufttechnische Anlage mit zumindest einem ersten Hauptströmungsweg (1) von einem Abluftanschluss (ABL) zu einem Fortluftanschluss (FOL), einem zweiten Hauptströmungsweg (3) von einem Außenluftanschluss (AUL) zu einem Zuluftanschluss (ZUL), zumindest einem Gehäuse (2) und zumindest zwei in dem zumindest einen Gehäuse (2) an benachbarten Anordnungsstellen (5, 6) in Reihe angeordneten, zwischen zumindest den Luftströmen des ersten und zweiten Hauptströmungswegs (1, 3) Wärme übertragenden Trennflächen-Wärmeübertragern (10), wobei der jeweilige Trennflächen-Wärmeübertrager (10) zumindest vier Strömungsseiten (11, 12, 13, 14) und zwei bezüglich Luftströmen undurchlässige Breitseiten (15, 16) aufweist, und wobei eine gedachte Längsachse (L) des jeweiligen Trennflächen-Wärmeübertragers (10) die Breitseiten und Trennflächen durchstößt, wobei die Längsachsen (L) entweder zumindest grob parallel oder übereinstimmend ausgerichtet sind oder einen Winkel von etwa 140° bis 165° einschließen,
**dadurch gekennzeichnet, dass**
die luftundurchlässigen Breitseiten der in Reihe geschalteten Trennflächen-Wärmeübertrager (10) einander zugewandt angeordnet sind.

2. Raumlufttechnische Anlage nach Anspruch 1,
**dadurch gekennzeichnet, dass** das Gehäuse (2) beide Strömungswege umfasst, dass die oben genannten Luftanschlüsse in einem Luftende (7) des Gehäuses (2) angeordnet sind,
und dass
die Trennflächen-Wärmeübertrager (10) in einem zu dem Luftende (7) beabstandeten Übertragungsende (8) des Gehäuses (2) angeordnet sind, und dass
zwischen dem Luftende (7) und dem Übertragungsende (8) zumindest eine Umschalteinrichtung (20) mit Klappen (22) zumindest zum Umlenken der Luftströme angeordnet ist.

3. Raumlufttechnische Anlage nach Anspruch 2,
**dadurch gekennzeichnet, dass**
die zumindest zwei Trennflächen-Wärmeübertrager (10) eine Strömungsseitenlänge (17), also eine Länge entlang der Längsachse (L), aufweisen, die deutlich größer ist als die Länge der Breitseiten (15, 16), insbesondere größer als 1,5 mal so groß wie die Breitseitenlänge.

4. Raumlufttechnische Anlage nach einem der Ansprüche 2 oder 3, **dadurch gekennzeichnet, dass** das Luftende (7) nach außen offen ist, während das Übertragungsende (8) keine luftführende Verbindung zur Umgebung aufweist, demnach geschlossen als eine Art Sackende ausgeführt ist.

5. Raumlufttechnische Anlage nach einem der vorangehenden Ansprüche 2 bis 4, **dadurch gekennzeichnet, dass** der jeweilige Trennflächen-Wärmeübertrager (10) quer zu seiner jeweiligen Ein- und Ausströmrichtung in das oder aus dem Gehäuse (2) angeordnet ist, wobei zumindest eine Strömungsseite (11, 12, 13, 14) dem Luftende (7) zugewandt ist, um Luft aus der Umschalteinrichtung (20) zu empfangen beziehungsweise an die Umschalteinrichtung (20) abzugeben.

6. Raumlufttechnische Anlage nach einem der Ansprüche 2 bis 5, **dadurch gekennzeichnet, dass** die
Umschalteinrichtung (20) als eine einzige entlang einer Hauptströmungsrichtung (S) geteilte Doppelkanalführung ausgebildet ist oder aus zumindest zwei zumindest abschnittsweise zumindest grob entlang dieser Hauptströmungsrichtung (S) verlaufenden Umschaltkanälen (20.1, 20.2) besteht.

7. Raumlufttechnische Anlage nach einem der Ansprüche 2 bis 6, **dadurch gekennzeichnet, dass** die Umschalteinrichtung (20) grundsätzlich voneinander getrennt die Außenluft der Fortluft entgegen führt.

8. Raumlufttechnische Anlage nach einem der Ansprüche 2 bis 7, **dadurch gekennzeichnet, dass** Klappenschaltungen und/oder Klappenregelungen von Bypassklappen ein Umgehen der Trennflächen-Wärmeübertrager (10) ermöglichen.

9. Raumlufttechnische Anlage nach einem der Ansprüche 2 bis 8, **dadurch gekennzeichnet, dass** außerhalb der Umschalteinrichtung (20) oder in die Umschalteinrichtung (20) integriert, nämlich in ihren Kanalwandungen, ggf. mit außerhalb der Trennflächen-Wärmeübertrager (10) synchronisierte Bypassklappen eingesetzt sind.

10. Raumlufttechnische Anlage nach einem der Ansprüche 2 bis 9, **dadurch gekennzeichnet, dass** die Umschalteinrichtung (20) und/oder eine die Umschalteinrichtung umschließende Trennwand quer zur Hauptströmungsrichtung (S) in Richtung Trennflächen-Wärmeübertrager (10) gesehen (vgl. Schnitte C - C oder D - D) nebeneinander in zumindest einer Wandung angeordnet aufweist eine erste Abluftklappe, eine erste Außenluftklappe, eine Fortluftklappe, eine Zuluftklappe, eine zweite Abluftklappe und / oder eine zweite Außenluftklappe.

11. Raumlufttechnische Anlage nach einem der Ansprüche 2 bis 10, **dadurch gekennzeichnet, dass** die Umschalteinrichtung (20) als zumindest eine Umschaltbox mit zur Längsachse der Trennflächen-Wärmeübertrager (10) parallel ausgerichteter Hauptströmungsrichtung (S) ausgeführt ist.

12. Raumlufttechnische Anlage nach einem der Ansprüche 2 bis 11, **dadurch gekennzeichnet, dass** die Umschalteinrichtung (20) in eine Regelung nach die Luft charakterisierenden Regelparametern integriert ist, insbesondere mit Aktoren, wie Mischklappen, die Luftströme nicht nur ein- oder abschalten sondern auch drosseln können.

13. Raumlufttechnische Anlage nach einem der Ansprüche 2 bis 12, **dadurch gekennzeichnet, dass** die Umschalteinrichtung (20) quer zur Hauptströmungsrichtung (S) dem Übertragungsende (8) abgewandt in Kanalwänden, insbesondere in einer einzigen Seitenwand des Gehäuses, ausgeführt nebeneinander alle Luftanschlüsse (ABL, AUL, FOL, ZUL) aufweist.

14. Raumlufttechnische Anlage nach einem der Ansprüche 2 bis 13, **dadurch gekennzeichnet, dass** in zumindest einer Kanalwand der Umschalteinrichtung (20) angeordnete Klappen derart ausgelegt sind, dass Druckverluste der beiden Hauptströmungswege (1, 3) annähernd gleich sind, wenn beide Hauptströmungswege annähernd gleich häufig benötigt werden, oder entsprechend abweichender Häufigkeiten abweichende Querschnitte aufweisen.

15. Verwendung einer raumlufttechnischen Anlage nach einem der Ansprüche 1 bis 14 in einem rekuperativen Verfahren zur Wärmerückgewinnung mit festen Austauschflächen.

## Claims

1. A ventilation system with at least
a first main flow path (1) from an exhaust connection (EXH) to an extract air connection (EXT),
a second main flow path (3) from an outdoor air connection (ODA) to a supply air connection (SUP),
at least one casing (2), and
at least two heat exchangers based on separating surfaces (10) arranged in series in adjacent arrangement points (5, 6) in the at least one casing (2), exchanging heat between at least the air flows of the first and the second main flow paths (1, 3), wherein the respective heat exchanger (10) has at least four flow sides (11, 12, 13, 14) and two broad sides (15, 16) that are impermeable to air flows, and wherein an imagined longitudinal axis (L) of the respective heat exchanger (10) penetrates the broad sides and separating surfaces, wherein the longitudinal axes (L) are aligned either at least roughly parallel or correspondingly or enclosing an angle of about 140° to 165°,
**characterised in that**
the air-impermeable broad sides of the exchangers (10) switched in series are arranged facing each other.

2. The ventilation system according to claim 1,
**characterised in that** the casing (2) comprises both flow paths, that the above air connections are arranged in an air end section (7) of the casing (2), and that
the heat exchanger based on separating surfaces (10) are arranged in a transfer end section (8) of the casing (2) at a distance from the air end section (7), and that at least one switching device (20) with dampers (22) is arranged between the air end section (7) and the transfer end section (8) at least to redirect the air flows.

3. The ventilation system according to claim 2,
**characterised in that** the at least two heat exchangers based on separating surfaces (10) have a flow side length (17), i.e., a length along the longitudinal axis (L), that is much larger than the length of the broad sides (15, 16), in particular larger than 1.5 times the broad side length.

4. The ventilation system according to one of claims 2 or 3, **characterised in that** the air end section (7) is open to the outside while the transfer end section (8) has no air-connection to the environment and is accordingly designed closed as a kind of blind end section.

5. The ventilation system according to one of the preceding claims 2 to 4, **characterised in that** the respective heat exchanger based on separating surfaces (10) is arranged crosswise to its respective in- and outlet flow direction into or out of the casing (2), wherein at least one flow side (11, 12, 13, 14) is facing the air end section (7) in order to receive air from the switching device (20) or to emit air to the switching device (20).

6. The ventilation system according to one of claims 2 to 5, **characterised in that** the switching device (20) is formed as a single dual duct separated along a main flow direction (S) or comprising at least two switching ducts (20.1, 20.2) running at least roughly along this main flow direction (S) at least in sections.

7. The ventilation system according to one of claims 2 to 6, **characterised in that** the switching device (20) generally guides the outside air opposite the outgoing air separated from each other.

8. The ventilation system according to one of claims 2 to 7, **characterised in that** damper arrangement and/or damper controls of bypass dampers permit bypassing of the heat exchangers (10).

9. The ventilation system according to one of claims 2 to 8, **characterised in that** synchronised bypass dampers are installed outside of the switching device (20) or integrated in the switching device (20), specifically in its duct walls, if applicable synchronised with outside of the heat exchangers (10).

10. The ventilation system according to one of claims 2 to 9, **characterised in that** the switching device (20) and/or a separating wall enclosing the switching device crosswise to the main flow direction (S) when viewed in the direction of the heat exchanger (10) (cf. sections C - C or D - D) has a first exhaust damper, a first outdoor air damper, an outgoing air damper, a supply air damper, a second exhaust damper and/or a second outgoing air damper arranged side by side in at least one wall.

11. The ventilation system according to one of claims 2 to 10, **characterised in that** the switching device (20) is executed as at least one switching box with main flow direction (S) aligned in parallel with the longitudinal axis of the heat exchangers (10).

12. The ventilation system according to one of claims 2 to 11, **characterised in that** the switching device (20) is integrated into a control unit based on control parameters characterising the air, in particular with actors such as mixing dampers that are able to not only turn air flows on and off, but also to throttle them.

13. The ventilation system according to one of claims 2 to 12, **characterised in that** the switching device (20) has all air connections (EXH=ABL, ODA=AUL, EXT=FOL, SUP=ZUL) placed side by side in duct walls, in particular in a single side wall of the casing, crosswise to the main flow direction (S) and facing away from the transfer end (8) .

14. The ventilation system according to one of claims 2 to 13, **characterised in that** dampers arranged in at least one duct wall of the switching device (20) are designed so that the pressure losses of the two main flow paths (1, 3) are approximately the same if both main flow paths are required approximately equally often, or that they have deviating cross-sections according to deviating frequencies.

15. Use of ventilation system according to one of claims 1 to 14 in a recuperative procedure for heat recovery with fixed exchange surfaces.

## Revendications

1. Installation destinée au conditionnement de l'air ambiant avec au moins
une première voie d'écoulement principale (1) entre un raccord d'air vicié (ABL) et un raccord d'air rejeté (FOL),
une deuxième voie d'écoulement principale (3) entre un raccord d'air extérieur (AUL) et un raccord d'air frais (ZUL),
au moins un boîtier (2) et
au moins deux échangeurs de chaleur à surfaces de séparation (10) disposés en série dans lesquels au moins un boîtier (2) au niveau de points de disposition voisins (5, 6) et transmettant de la chaleur entre au moins les courants d'air de la première et de la deuxième voie d'écoulement principale (1, 3), l'échangeur de chaleur à surfaces de séparation (10) respectif présentant au moins quatre côtés d'écoulement (11, 12, 13, 14) et deux côtés larges (15, 16) imperméables aux courants d'air, et un axe longitudinal imaginaire (L) de l'échangeur de chaleur à surfaces de séparation (10) respectif traversant les côtés larges et les surfaces de séparation, les axes longitudinaux (L) étant soit au moins grossièrement parallèles, soit orientés de manière concordante, ou formant un angle d'environ 140° à 165°,
**caractérisée en ce que**
les côtés larges imperméables à l'air des échangeurs de chaleur à surfaces de séparation (10) montés en série sont disposés les uns en face des autres.

2. Installation destinée au conditionnement de l'air ambiant selon la revendication 1,
**caractérisée en ce que** le boîtier (2) comprend les deux voies d'écoulement, **en ce que** les raccords d'air susmentionnés sont disposés dans une extrémité d'air (7) du boîtier (2),
et que
les échangeurs de chaleur à surface de séparation (10) sont disposés dans une extrémité de transfert (8) du boîtier (2) espacée de l'extrémité d'air (7), et **en ce que**
entre l'extrémité d'air (7) et l'extrémité de transmission (8), au moins un dispositif de commutation (20) avec des clapets (22) est disposé au moins pour dévier les courants d'air.

3. Installation destinée au conditionnement de l'air ambiant selon la revendication 2,
**caractérisée en ce qu'**au moins deux échangeurs de chaleur à surfaces de séparation (10) présentent une longueur de côté d'écoulement (17), donc une longueur le long de l'axe longitudinal (L), qui est nettement supérieure à la longueur des côtés larges (15, 16), en particulier supérieure à 1,5 fois la longueur des côtés larges.

4. Installation destinée au conditionnement de l'air ambiant selon l'une des revendications 2 ou 3, **caractérisée en ce que** l'extrémité d'air (7) est ouverte vers l'extérieur, tandis que l'extrémité de transmission (8) ne présente pas de liaison conductrice d'air avec l'environnement, et est donc réalisée fermée comme une sorte d'extrémité de la manche.

5. Installation destinée au conditionnement de l'air ambiant selon l'une des revendications 2 à 4, **caractérisée en ce que** l'échangeur de chaleur à surfaces de séparation (10) respectif est disposé transversalement à son sens d'entrée et de sortie respectif dans ou hors du boîtier (2), au moins un côté d'écoulement (11, 12, 13, 14) étant tourné vers l'extrémité d'air (7) afin de recevoir de l'air en provenance du dispositif de commutation (20) ou de le délivrer au dispositif de commutation (20).

6. Installation destinée au conditionnement de l'air ambiant selon l'une des revendications 2 à 5, **caractérisée en ce que** le dispositif de commutation (20) est réalisé sous la forme d'un seul guidage à double canal divisé le long d'un sens d'écoulement principal (S) ou est constitué d'au moins deux canaux de commutation (20.1, 20.2) s'étendant au moins grossièrement au moins par sections le long de ce sens d'écoulement principal (S).

7. Installation destinée au conditionnement de l'air ambiant selon l'une des revendications 2 à 6, **caractérisée en ce que** le dispositif de commutation (20) amène l'air extérieur en sens inverse de l'air rejeté, en étant systématiquement séparé l'un de l'autre.

8. Installation destinée au conditionnement de l'air ambiant selon l'une des revendications 2 à 7, **caractérisée en ce que** des montages de clapets et/ou des régulations de clapets de clapets de dérivation permettent de contourner les échangeurs de chaleur à surfaces de séparation (10).

9. Installation destinée au conditionnement de l'air ambiant selon l'une des revendications 2 à 8, **caractérisée en ce que** des clapets de dérivation, le cas échéant synchronisés à l'extérieur des échangeurs de chaleur à surfaces de séparation (10), sont employés à l'extérieur du dispositif de commutation (20) ou intégrés au dispositif de commutation (20), à savoir dans les parois de canal.

10. Installation destinée au conditionnement de l'air ambiant selon l'une des revendications 2 à 9, **caractérisée en ce que** le dispositif de commutation (20) et/ou une paroi de séparation enveloppant le dispositif de commutation présentent, disposés l'un à côté de l'autre transversalement au sens d'écoulement principal (S) en direction de l'échangeur de chaleur à surfaces de séparation (10) (cf. coupes C - C ou D - D), dans au moins une paroi, un premier clapet d'air vicié, un premier clapet d'air extérieur, un clapet d'air rejeté, un clapet d'air frais, un deuxième clapet d'air vicié et/ou un deuxième clapet d'air extérieur.

11. Installation destinée au conditionnement de l'air ambiant selon l'une des revendications 2 à 10, **caractérisée en ce que** le dispositif de commutation (20) est réalisé sous forme d'au moins un boîtier de commutation avec un sens d'écoulement principal (S) orienté parallèlement à l'axe longitudinal des échangeurs de chaleur à surfaces de séparation (10).

12. Installation destinée au conditionnement de l'air ambiant selon l'une des revendications 2 à 11, **caractérisée en ce que** le dispositif de commutation (20) est intégré à une régulation selon des paramètres de régulation caractérisant l'air, en particulier avec des actionneurs, tels que des clapets de mélange, pouvant non seulement activer ou désactiver les courants d'air, mais également les étrangler.

13. Installation destinée au conditionnement de l'air ambiant selon l'une des revendications 2 à 12, **caractérisée en ce que** le dispositif de commutation (20) présente, transversalement au sens d'écoulement principal (S), à l'opposé de l'extrémité de transmission (8), dans des parois de canal, en particulier dans une seule paroi latérale du boîtier, tous les raccords d'air (ABL, AUL, FOL, ZUL) les uns à côté des autres.

14. Installation destinée au conditionnement de l'air ambiant selon l'une des revendications 2 à 13, **caractérisée en ce que** des clapets disposés dans au moins une paroi de canal du dispositif de commutation (20) sont conçus de telle sorte que les pertes de pression des deux voies d'écoulement principales (1, 3) sont à peu près égales lorsque les deux voies d'écoulement principales sont requises à peu près à la même fréquence, ou présentent des sections transversales divergentes en fonction de fréquences divergentes.

15. Utilisation d'une installation destinée au conditionnement de l'air ambiant selon l'une des revendications 1 à 14 dans un procédé récupératif destiné à la récupération de chaleur avec des surfaces d'échange fixes.
